# EUROPEAN PATENT SPECIFICATION

(11) **EP 1 029 895 B1**
(45) Date of publication and mention of the grant of the patent: **18.07.2007**
(21) Application number: 00200495.0
(22) Date of filing: 15.02.2000
(51) Int. Cl.: C08L 71/02, C08L 29/14, C04B 35/634, C04B 35/638, B22F 1/00

(54) **Composition containing a binder for a PIM-Process**
Bindemittel enthaltende Zusammensetzung für ein PIM-Verfahren
Coposition content un liant pour le PIM-procédé

(30) Priority: 16.02.1999 NL 1011310
(43) Date of publication of application: 23.08.2000
(73) Proprietor: Corus Technology BV, 1970 CA IJmuiden (NL)
(72) Inventor: Verdier, Anthony Stephan, 1964 LE Heemskerk (NL); Wittebrood, Adrianus Jacobus, 1991 HB Velserbroek (NL); Kooij, Christiaan Johannes, 1815 LS Alkmaar (NL); Schram, Hendrik Leendert, 1566 LJ Assendelft (NL)
(74) Representative: Hansen, Willem Joseph Maria

(56) References cited:
- EP-A- 0 441 219
- EP-A- 0 509 625
- EP-A- 0 930 281
- DATABASE WPI Section Ch, Week 198114 Derwent Publications Ltd., London, GB; Class A85, AN 1981-24084D XP002118132 & JP 55 156378 A (MATSUSHITA ELEC IND CO LTD), 5 December 1980 (1980-12-05)
- DATABASE WPI Section Ch, Week 199119 Derwent Publications Ltd., London, GB; Class A81, AN 1991-137322 XP002118133 & JP 03 075263 A (UBE IND LTD), 29 March 1991 (1991-03-29)
- DATABASE WPI Section Ch, Week 197651 Derwent Publications Ltd., London, GB; Class A81, AN 1976-95184X XP002182935 & JP 51 126205 A (FUJITSU LTD), 4 November 1976 (1976-11-04)

## Description

The invention relates to a composition containing binder system for use in a powder injection moulding (PIM) process or a powder extrusion process as defined in the present claims. The invention also relates to a method for producing a sintered product by means of metal injection moulding (MIM) and ceramic injection moulding (CIM) using the binder system. The invention also relates to the use of polymers in the binder system.

Powder injection moulding (PIM) processes comprise the metal injection moulding (MIM) process and the ceramic injection moulding (CIM) process.

The injection moulding of ceramic powders by means of ceramic injection moulding (CIM) is known, inter alia, from an article by H. Schram and N. Noort, in Klei, Glas en Keramiek, 16th edition No.4, pp.4-6. The advantages and disadvantages described in this article substantially also apply to the injection moulding of metallic powders by means of metal injection moulding (MIM).

Both an MIM and a CIM process broadly comprise the following successive process steps:
(i) mixing a binder system;
(ii) mixing a ceramic powder or a metal powder with the binder system;
(iii) granulating the mixture obtained to form a feedstock;
(iv) injection moulding of the feedstock to form a green product;
(v) removing the binder system from the green product;
(vi) sintering the green product to form an end product.

It will be clear to the person skilled in the art that injection moulding as a shaping technique can also be replaced by extrusion techniques. In the context of the present application, the MIM and CIM process is deemed to include the extruding of the feedstock, in addition to injection moulding.

As described in the above-referenced article, the selection of the binder system used in a CIM process, but also in a MIM process and an extrusion process, is of essential importance in order to obtain sintered products with tight tolerances. Furthermore, the selection of the binder system plays an important role, inter alia, in achieving an economic process with a low percentage rejection of the products produced.

A binder system which is suitable for use in the extruding or injection moulding of metal or ceramic powders is known, for example, from European Patent Application No. EP-A-0428999. The known binder system is a three-component system, its principal component being 30-90% by weight polyvinyl acetate (PVAC) with a mean molecular weight in a range from 35,000 to 1,000,000, more preferably in a range from 50,000 to 200,000, and also containing 10 to 70% by weight of a binder component. The binder component substantially comprises polyethylene glycol (PEG) with a mean molecular weight in a range from 2000 to 20,000, and more preferably in a range from 6000 to 35,000, and also 0.5 to 5% by weight of a pyrolysable component for wetting the powder.

A drawback of a binder system based on PVAC is the relatively high viscosity, making it relatively difficult to injection mould. A further drawback of this binder system is that the green products, after injection moulding, have insufficient green strength to allow them to be handled with ease subsequently. Furthermore, it has been found that the green products obtained are not sufficiently dimensionally stable.

It is an object of the invention to provide a binder system which can be used in a PIM process or in a powder extrusion process, which can also be well injection-moulded or extruded, and in which the binder system gives the green product a high green strength, while the binder system can partially be removed from a green product in an aqueous solution.

For this purpose, the binder system used in the composition according to the invention is characterized in that the binder system consists of: (a) 30 to 95 percent by weight of a water-soluble polyethylene glycol (PEG), and (b) 70 to 5 percent by weight of a polyvinyl butyral (PVB).

The result is a binder system which is based on only two components. The absence of at least a third component, which is generally added in order to improve the wetting of the powders, results in a binder system which is simple to prepare and process. With the binder system also a high green strength of the green product is obtained, and furthermore a high dimensional stability of the green product.

It has been found that green products produced using the binder system according to the invention can even be machined well. Due to the relatively high PEG content, the binder system has a low viscosity, so that it can be well injection-moulded or extruded. Furthermore, the binder system has a high level of flexibility in terms of the type of powders which, with regard to composition, shape and particle size, can be processed with very high levels of success using the binder system. By altering the PEG/PVB weight ratio within the range indicated, virtually all powders can be processed successfully, since the mouldability or extrudability can be adjusted for each type of powder.

At least 70% of the PEG can be removed from a green product by means of a solvent which comprises substantially water. The PEG dissolves very easily in water and is also completely biodegradable. It has been found that demineralized water and even tap water are very successful in removing the PEG. For the binder system according to the invention, it is no longer necessary to use acids or alcohols. Both the fact that PEG is biodegradable and the fact that (tap)water can be used to remove the PEG from the green product, instead of an alcohol or acid, make the binder system according to the invention very ecologically sound.

With the binder system according to the composition of the invention, powder loads of ceramic powders in a range of up to 55% by volume are possible, while for metallic powders powder loads in a range of up to 65 percent by volume are very readily possible.

A further advantage of a PEG/PVB binder system according to the invention is that rejected green products and castings can be regranulated without further working and can then be reprocessed by means of PIM or extrusion.

An advantageous embodiment of the binder system according to the composition of the invention is characterized in that the binder system consists of: (a) 50 to 95 percent by weight of a water-soluble polyethylene glycol (PEG), and (b) 50 to 5 percent by weight of a polyvinyl butyral (PVB). With this mixing ratio a binder system which can be well prepared and processed is obtained.

By the removal of the water-soluble PEG an open structure is generated. Consequently, no cracks or inclusions are formed in the products during the pyrolysis step as a result of a local pressure build-up from gases released during the pyrolysis. Furthermore, the subsequent sintering step can be carried out at an accelerated rate, with the result that the overall process time can be considerably shortened.

A further advantageous embodiment of the binder system according to the composition of the invention is characterized in that the binder system consists of: (a) 60 to 80 percent by weight of a water-soluble polyethylene glycol (PEG), and (b) 40 to 20 percent by weight of a polyvinyl butyral (PVB). In this mixing ratio a binder system which can be well prepared and processed is obtained.

An embodiment of the binder system according to the composition of the invention is characterized in that the PEG has a mean molar mass (M_{w}) in a range from 1000 to 10,000 g/mol. It has been found that with a mean molar mass of more than 10,000 g/mol the debinding time in an aqueous solution is very long, and it has also been found that it is impossible to remove at least 70% of the PEG from a green product. Furthermore, the binder system based on PEG and PVB in the range indicated has a good thermal stability in a temperature range from 30 to 110°C, which is an important precondition in order to achieve good mixing between the two polymers. Degradation of the PEG and PVB used may occur at a temperature higher than 110°C. More preferably, the two polymers are mixed in the ratio indicated in a temperature range from 75 to 110°C.

In a further preferred embodiment, the binder system according to the composition of the invention is characterized in that the PEG has a mean molar mass (M_{w}) in a range from 1500 to 5000 g/mol.

In a further preferred embodiment, the binder system according to the composition of the invention is characterized in that the PEG has a mean molar mass (M_{w}) in a range from 1800 to 3500 g/mol. Since the PEG has a relatively low mean molar mass in the range indicated, a relatively rapid debinding or binder removal time is obtained as a function of the wall thickness, and furthermore over 70% of the PEG can be removed from the green products. In the case of relatively thin-walled products, it is even possible to remove 100% of the PEG from the green products. A further significant advantage is that since the PEG with a molar mass in the range indicated can be very well removed from the green products, it is also possible to produce products with very thick walls. It has been found that products with a wall thickness up to 16 mm and even up to 20 mm can be produced, while with the known polymer binder systems it is only possible to produce green products with a wall thickness up to about 12 mm. Also, in the range indicated, a sufficiently high green strength is obtained, and the binder system can be very well processed by means of injection moulding or extrusion. The typical value of the green strength obtained lies in a range from 25 to 75 MPa. A green strength of this height even allows the green product to be machined.

In an embodiment, the binder system according to the composition of the invention is characterized in that the PVB has a polyvinyl percentage in a range from 15 to 24 percent by weight. The PVB with a polyvinyl percentage in the range indicated can be mixed very successfully with the PEG described above.

In a further embodiment, the PVB is characterized in that it has a polyvinyl percentage in a range from 18 to 21 per cent by weight. In the range indicated, the final PEG/PVB polymer mixture has a low viscosity, a torque in a range up to 40 Nm, and consequently can be prepared and then processed with excellent results. It has been found that feedstock with a torque of more than 40 Nm is difficult to injection mould at a speed of 60 rpm.

A further aspect of the invention relates to a method for producing a product by means of PIM or powder extrusion using the binder system according to the composition of the invention, in which, to remove the binder system from an injection-moulded or extruded green product, firstly at least 70% of the PEG is removed by means of the solvent which substantially comprises water, the PEG being removed by holding the green product at a temperature in a range from 10 to 40°C during 8 to 100 hours.

Thus at least 70% of the PEG used can be removed from a green product by means of a solvent which comprises substantially water. It has been found that demineralized water and even tap water can be used with very great success to remove the PEG. Depending on the thickness of the intermediate product, it may even be possible to remove 100% of the PEG from the green product. The PEG with a molar mass in the range indicated above dissolves very well in water and, furthermore, is fully biodegradable which renders the method ecologically sound. During the removal of the PEG with a molar mass in the range indicated from a green product, a very high dimensional stability of the green product is obtained, since there is virtually no expansion or shrinkage. Furthermore, it has been found that for ceramic green products invention the temperature preferably lies in a range from 20 to 30°C. If the water is at a lower temperature, this may lead to the forming of cracks in the green product. For green products containing metallic powders, it has been found that the temperature of the water is less critical.

The invention will be explained below in a number of examples which do not limit the invention.

### Example 1

In an example of the production of a ceramic product by means of CIM using the binder system according to the composition of the invention, in a mixing unit the commercially available polyvinyl butyral with a polyvinyl alcohol percentage of 20% by weight and the commercially available polyethylene glycol 2000 (M_{w} in a range from 1800 to 2200 g/mol) are melted, with a mixing ratio of 30/70, at a temperature of 90°C and are homogenized for approximately 10 minutes. Then, an aluminium oxide powder is added in batches with a maximum particle size of 50 µm, followed by homogenization. The PEG/PVB polymer mixture used wetted the powder used very well. The feedstock obtained with a powder load of 50% by volume is then cooled in air and granulated to a maximum particle size of 3 mm. The feedstock is then injection moulded. The injection-moulded green products had a maximum size of 30 mm and the maximum wall thickness of 16 mm. The castings and rejected green intermediate products can be regranulated and thus reused directly. The green strength of the products lay in a range from 40 to 45 MPa. The green products are laid on a substrate material in a vessel containing flowing tap water at a temperature in a range from 20 to 25°C for 50 to 70 hours. During rinsing in the water, at least 90% of the PEG in the binder system used was dissolved. After removal of the PEG, the green products are dried and, via a predetermined temperature programme, the PVB was pyrolysed, followed by sintering to form an end product. The sintering program depends, inter alia, on the desired final strength and particle size of the ceramic powder used.

### Example 2

In an example for the production of a product by means of an MIM using the binder system according to the composition of the invention, in a mixing unit a polymer mixture in a ratio of 40/60 of commercially available PVB with a polyvinyl alcohol percentage of 20% and PEG with a mean molar mass of 3350 g/mol are melted at a temperature of 90°C, followed by homogenisation for about 10 to 15 minutes. Then, a Fe2Ni powder (98% by weight carbonyl iron with 2% by weight Ni) with a mean particle size of 20 pm is then added in batches, followed by homogenisation. The feedstock obtained, with a powder load of 60% by volume, was then cooled in air and granulated. Then, the feedstock was injection moulded. The injection-moulded green products had a maximum size of 28.3 mm. Debinding took place in water with a pH of 9 to 10, in order to prevent rust from being deposited on the product, and a temperature in a range from 20 to 25°C. A suitable debinding time is 30 to 50 hours, during which period more than 75% of all the PEG from the binder system dissolves in the water. The green products are then thermally debound in a separate furnace, after which the products contain less than 0.3% by weight carbon and oxygen. The presintered products are then sintered at a temperature in a range from 1200 to 1250°C to form an end product. A dimensional accuracy of approximately 0.3% is achieved.

## Claims

1. Composition for use in a powder injection moulding (PIM) process or a powder extrusion process comprising a metallic or ceramic powder and a binder system with a polyethylene glycol and a polyvinyl butyral, **characterized in that** the binder system consists of:
(a) 30 to 95 percent by weight of a water-soluble polyethylene glycol; and
(b) 70 to 5 percent by weight of a polyvinyl butyral.

2. Composition according to Claim 1, **characterized in that** the binder system consists of:
(a) 50 to 95 percent by weight of a water-soluble polyethylene glycol; and
(b) 50 to 5 percent by weight of a polyvinyl butyral.

3. Composition according to Claim 2, **characterized in that** the binder system consists of:
(a) 60 to 80 percent by weight of a water-soluble polyethylene glycol; and
(b) 40 to 20 percent by weight of a polyvinyl butyral.

4. Composition according to any one of Claims 1 to 3, **characterized in that** the polyethylene glycol (PEG) has a mean molar mass in a range from 1000 to 10,000 g/mol.

5. Composition according to Claim 4, **characterized in that** the polyethylene glycol (PEG) has a mean molar mass in a range from 1500 to 5000 g/mol.

6. Composition according to Claim 5, **characterized in that** the polyethylene glycol (PEG) has a mean molar mass in a range from 1800 to 3500 g/mol.

7. Composition according to any one of Claims 1 to 6, **characterized in that** the polyvinyl butyral (PVB) has a polyvinyl alcohol percentage in a range from 15 to 24 per cent by weight.

8. Method for producing a product by means of PIM or powder extrusion using a composition according to any one of Claims 1 to 7, **characterized in that**, in order to remove the binder system from an injection-moulded or extruded green product, firstly at least 70% of the PEG is removed by means of a solvent which substantially comprises water, the PEG being removed by holding the green product at a temperature in a range from 10 to 40°C during 8 to 100 hours.

9. Method according to Claim 8, **characterized in that** the solvent which comprises substantially water is at a temperature in a range from 20 to 30°C.

## Patentansprüche

1. Zusammensetzung zur Verwendung in einem Pulverspritzgießverfahren (PIM) oder einem Pulverextrusionsverfahren, umfassend ein Metall- oder Keramikpulver und ein Bindemittelsystem mit einem Polyethylenglykol und einem Polyvinylbutyral, **dadurch gekennzeichnet, dass** das Bindemittelsystem besteht aus:
a) 30 bis 95 Gewichtsprozent eines wasserlöslichen Polyethylenglykols; und
b) 70 bis 5 Gewichtsprozent eines Polyvinylbutyrals.

2. Zusammensetzung nach Anspruch 1, **dadurch gekennzeichnet, dass** das Bindemittelsystem besteht aus:
a) 50 bis 95 Gewichtsprozent eines wasserlöslichen Polyethylenglykols; und
b) 50 bis 5 Gewichtsprozent eines Polyvinylbutyrals.

3. Zusammensetzung nach Anspruch 2, **dadurch gekennzeichnet, dass** das Bindemittelsystem besteht aus:
a) 60 bis 80 Gewichtsprozent eines wasserlöslichen Polyethylenglykols; und
b) 40 bis 20 Gewichtsprozent eines Polyvinylbutyrals.

4. Zusammensetzung nach einem der Ansprüche 1 bis 3, **dadurch gekennzeichnet, dass** das Polyethylenglykol (PEG) eine mittlere Molmasse in einem Bereich von 1000 bis 10.000 g/mol hat.

5. Zusammensetzung nach Anspruch 4, **dadurch gekennzeichnet, dass** das Polyethylenglykol (PEG) eine mittlere Molmasse in einem Bereich 1500 bis 5000 g/mol hat.

6. Zusammensetzung nach Anspruch 5, **dadurch gekennzeichnet, dass** das Polyethylenglykol (PEG) eine mittlere Molmasse in einem Bereich von 1800 bis 3500 g/mol hat.

7. Zusammensetzung nach einem der Ansprüche 1 bis 6, **dadurch gekennzeichnet, dass** das Polyvinylbutyral (PVB) einen Prozentsatz an Polyvinylalkohol im Bereich von 15 bis 24 Gewichtsprozent hat.

8. Verfahren zur Herstellung eines Produkts mittels PIM oder Pulverextrusion unter Verwendung einer Zusammensetzung nach einem der Ansprüche 1 bis 7, **dadurch gekennzeichnet, dass** zur Entfernung des Bindemittelsystems von einem spritzgegossenen oder extrudierten ungesinterten Produkt zuerst mindestens 70% des PEG mithilfe eines Lösungsmittels entfernt wird, das im Wesentlichen Wasser enthält, wobei das PEG **dadurch** entfernt wird, dass das ungesinterte Produkt bei einer Temperatur in einem Bereich von 10 bis 40°C über 8 bis 100 Stunden gehalten wird.

9. Verfahren nach Anspruch 8, **dadurch gekennzeichnet, dass** das Lösungsmittel, das im Wesentlichen Wasser enthält, bei einer Temperatur im Bereich von 20 bis 30°C liegt.

## Revendications

1. Composition conçue pour être employée dans un procédé d'injection-moulage de poudre (IMP) ou un procédé d'extrusion de poudre, comprenant une poudre métallique ou céramique et un système de liant comportant un polyéthylène-glycol et un poly(butyral de vinyle), **caractérisée en ce que** le système de liant est constitué :
a) de 30 à 95 % en poids d'un polyéthylène-glycol hydrosoluble,
b) et de 70 à 5 % en poids d'un poly(butyral de vinyle).

2. Composition conforme à la revendication 1, **caractérisée en ce que** le système de liant est constitué :
a) de 50 à 95 % en poids d'un polyéthylène-glycol hydrosoluble,
b) et de 50 à 5 % en poids d'un poly(butyral de vinyle).

3. Composition conforme à la revendication 1, **caractérisée en ce que** le système de liant est constitué :
a) de 60 à 80 % en poids d'un polyéthylène-glycol hydrosoluble,
b) et de 40 à 20 % en poids d'un poly(butyral de vinyle).

4. Composition conforme à l'une des revendications 1 à 3, **caractérisée en ce que** le polyéthylène-glycol (PEG) présente une masse molaire moyenne située dans l'intervalle allant de 1 000 à 10 000 g/mol.

5. Composition conforme à la revendication 4, **caractérisée en ce que** le polyéthylène-glycol (PEG) présente une masse molaire moyenne située dans l'intervalle allant de 1 500 à 5 000 g/mol.

6. Composition conforme à la revendication 5, **caractérisée en ce que** le polyéthylène-glycol (PEG) présente une masse molaire moyenne située dans l'intervalle allant de 1 800 à 3 500 g/mol.

7. Composition conforme à l'une des revendications 1 à 6, **caractérisée en ce que** le poly(butyral de vinyle) (PVB) présente une teneur en poly(alcool vinylique) située dans l'intervalle allant de 15 à 24 % en poids.

8. Procédé de production d'un article par injection-moulage de poudre ou par extrusion de poudre, à partir d'une composition conforme à l'une des revendications 1 à 7, **caractérisé en ce que**, pour éliminer le système de liant de l'article cru formé par injection-moulage ou par extrusion, on commence par en chasser au moins 70 % du PEG à l'aide d'un solvant comprenant de l'eau en proportion notable, en y maintenant l'article cru, à une température de 10 à 40 °C, pendant 8 à 100 heures.

9. Procédé conforme à la revendication 8, **caractérisé en ce que** le solvant comprenant de l'eau en proportion notable se trouve à une température de 20 à 30 °C.
